# DEMANDE DE BREVET EUROPEEN

(11) **EP 1 321 882 A1**
(43) Date de publication de la demande: **25.06.2003**
(21) Numéro de dépôt: 02292983.0
(22) Date de dépôt: 03.12.2002
(51) Int. Cl.: G06F 17/60

(54) **Système d'assistance à la prise de rendez-vous pour la livraison d'un produit**

(30) Priorité: 18.12.2001 FR 0116411
(71) Demandeur: FRANCE TELECOM, 75015 Paris (FR)
(72) Inventeur: Freihuber, Claude, 93160 Noisy le Grand (FR); Brouillet, Olivier, 92300 Levallois-Perret (FR); Bessierre, Philippe, 93110 Rosny sous Bois (FR)
(74) Mandataire: Habasque, Etienne Joel Jean-François

(57) **Abrégé**

Un système (2) d'assistance à la prise de rendez-vous pour la livraison d'un produit comporte des moyens (10) de stockage d'informations dans lesquels sont enregistrées des informations sur la disponibilité des plages horaires pour la livraison du produit. Ce système (2) comporte de plus des informations représentatives d'un délai de production du produit enregistrées dans les moyens (10) de stockage d'informations, un module de calcul d'un instant de fin de production en fonction au moins du délai de production, et un module de comparaison pour établir des plages horaires à la fois libres pour la livraison d'un produit et postérieures à l'instant de fin de production du produit. Il comporte également un l'afficheur (12) adapté pour indiquer au moins les plages horaires à la fois libres et postérieures à l'instant de fin de production.

## Description

L'invention concerne un système d'assistance à la prise de rendez-vous pour la livraison d'un produit comportant :
- des moyens de stockage d'informations dans lesquels sont enregistrées des informations sur la disponibilité des plages horaires pour la livraison du produit ; et
- un afficheur desdites informations sur la disponibilité des plages horaires, associé aux moyens de stockage d'informations.
   De tels systèmes sont par exemple utilisés par des entreprises livrant un grand nombre de produits à des clients. En effet, lorsqu'un client appelle, il désire connaître immédiatement la date à laquelle le produit qu'il commande pourra lui être livré. Or cette date de livraison dépend de nombreux paramètres tels que la disponibilité des équipes de livraison, le lieu géographique de la livraison, et les délais d'approvisionnement du produit en question. Il n'est donc pas possible à la personne qui répond au téléphone de prendre un rendez-vous avec le client pour la livraison du produit tenant compte de l'ensemble de ces différents paramètres sans utiliser un système quelconque pour l'assister dans cette tâche.
   Dans les systèmes connus l'afficheur est un ordinateur équipé d'un écran et d'un agenda électronique. Les moyens de stockage d'informations sont formés par le disque dur local de cet ordinateur.
   L'agenda électronique permet de visualiser des dates libres et des dates déjà réservées enregistrées dans le disque dur local de l'ordinateur, les dates réservées correspondant par exemple à des dates pour lesquelles le service de livraison de l'entreprise est déjà occupé. Il permet également de réserver éventuellement une de ces dates libres pour la livraison d'un produit d'un client.
   Toutefois, avec ces systèmes connus, il peut se produire qu'une date libre soit réservée pour un rendez-vous alors que cette date ne respecte pas les délais de production du produit. Il en résulte une incapacité à livrer le produit à la date prévue et réservée à cet effet.
   L'invention vise à remédier à cet inconvénient en proposant un système d'assistance à la prise de rendez-vous pour la livraison d'un produit évitant, dans la mesure du possible, les retards de livraison dus à des délais de production non respectés.
   L'invention a pour objet un système d'assistance caractérisé en ce qu'il comporte
- des moyens de stockage d'informations comportant des informations représentatives d'un délai de production du produit,
- un module de calcul d'un instant de fin de production en fonction des informations représentatives d'un délai de production du produit, et
- un module de comparaison pour établir des plages horaires à la fois libres pour la livraison d'un produit et postérieures à l'instant de fin de production du produit, par comparaison des informations sur la disponibilité des plages horaires à l'instant de fin de production déterminé par le module de calcul, et,
- l'afficheur est adapté pour indiquer au moins les plages horaires à la fois libres et postérieures à l'instant de fin de production.

Le système décrit ci-dessus permet d'indiquer automatiquement sur l'afficheur les plages horaires libres respectant les délais de production. Ainsi l'utilisateur, lorsqu'il choisit une de ces plages horaires libres indiquées par le système, est certain de prendre rendez-vous pour la livraison d'un produit à une date compatible avec les délais de production.

Suivant d'autres caractéristiques d'un système d'assistance à la prise de rendez-vous pour la livraison d'un produit conforme à l'invention :
- les informations représentatives d'un délai de production du produit comportent des délais élémentaires de production, et le module de calcul d'un instant de fin de production comporte des moyens de détermination du délai de production du produit à partir des délais élémentaires de production ;
- chaque délai élémentaire de production est associé à une unité de production, ces unités de production intervenant successivement ou simultanément dans le procédé de fabrication du produit, il comporte un module d'identification d'un utilisateur apte à identifier l'unité de production à laquelle appartient l'utilisateur du système ; et le module de calcul est adapté pour déterminer l'instant de fin de production en fonction uniquement des délais élémentaires de production associés à des unités de production intervenant dans le procédé de fabrication du produit après l'unité de production identifiée par le module d'identification et/ou simultanément avec cette dernière unité, et en fonction du délai élémentaire de production associé avec l'unité de production identifiée par le module d'identification ;
- le système comporte un module de réservation uniquement des plages horaires à la fois libres et postérieures à l'instant de fin de production, établies par le module de comparaison ;
- le système comporte de plus :
   - un module d'identification d'un superviseur apte à identifier si un utilisateur du système est un superviseur, et
   - un module de réservation apte à réserver une plage horaire libre mais antérieure à l'instant de fin de production si l'utilisateur identifié par le module d'identification d'un superviseur est un superviseur.

L'invention sera mieux comprise à la lecture de la description qui va suivre donnée uniquement à titre d'exemple et faite en se référant aux dessins sur lesquels :
- La figure 1 est une illustration schématique de l'architecture matérielle d'un système d'assistance à la prise de rendez-vous conforme à l'invention ;
- la figure 2 est une illustration schématique de l'architecture logicielle du système de la figure 1.

Par la suite, pour simplifier la description, les systèmes conformes à l'invention sont décrits dans le cas particulier où les plages horaires sont de 24h et correspondent donc à des dates. Toutefois, l'enseignement technique décrit ici s'applique également à des intervalles de temps plus courts, tels que des heures ou des minutes.

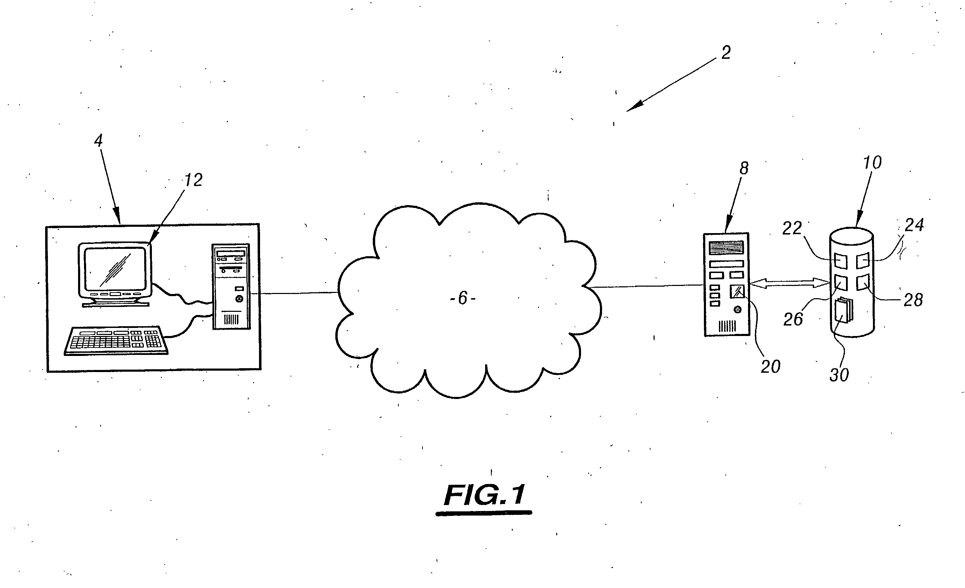

La figure 1 illustre un système 2 d'assistance à la prise de rendez-vous comportant un ordinateur 4 raccordé par l'intermédiaire d'un réseau 6 de transmission d'informations à un calculateur 8, ce calculateur 8 étant lui même associé à des moyens 10 de stockage d'informations.

L'ordinateur 4 est équipé d'un afficheur 12 d'informations envoyées par le serveur 8 par l'intermédiaire du réseau 6. Cet afficheur 12 est par exemple formé par un écran d'ordinateur associé à un navigateur Internet.

Le réseau 6 de transmission d'informations est ici le réseau Internet, plus connu sous le nom de "World Wide Web".

Le calculateur 8 est apte à exécuter un logiciel 20 d'assistance à la prise de rendez-vous. Ce calculateur 8 est ici formé par un serveur Internet classique.

Les moyens 10 de stockage d'informations sont aptes à enregistrer les informations nécessaires au fonctionnement du logiciel 20. Ces moyens 10 de stockage d'informations sont ici formés à partir d'un disque dur local du serveur 8. Dans la suite de la description ces moyens 10 de stockage d'informations seront simplement appelés "mémoire 10".

Cette mémoire 10 comporte une liste 22 d'unités de production, une liste 24 d'utilisateurs, une liste 26 de produits, une liste 28 de délais élémentaires de production et un agenda 30 de livraison.

La liste 22 définit les différentes unités de production intervenant dans les procédés de réalisation des produits d'une entreprise. Une unité de production est une entité regroupant une ou plusieurs personnes participant à la même étape de production du produit. Cette liste 22 comporte, pour chaque unité de production, un identifieur unique dit "identifieur d'une unité de production". Par exemple, ici, cette liste 22 comporte les informations suivantes :
- un identifieur "P1" correspondant au "service des ventes", c'est à dire à l'unité chargée de recevoir et d'enregistrer les commandes ;
- un identifieur "P2" correspondant au service administratif, c'est-à-dire à l'unité chargée, par exemple, du réapprovisionnement en matière première à partir des commandes enregistrées à honorer ; et
- un identifieur "P3" correspondant au service opérationnel, c'est-à-dire à l'unité chargée de réaliser les produits à livrer en fonction des commandes à honorer.

La liste 24 définit des utilisateurs du système 2. Cette liste comporte pour chaque utilisateur les informations pré-enregistrées suivantes :
- un nom de l'utilisateur,
- un mot de passe,
- un identifieur d'une unité de production à laquelle l'utilisateur est attaché, cet identifieur étant l'un de ceux de la liste 22, et
- un identifieur d'un superviseur.

L'identifieur d'un superviseur est destiné à indiquer qu'un utilisateur particulier possède des droits d'utilisation du système 2 plus étendus qu'un utilisateur standard.

L'identifieur d'un superviseur prend ici deux valeurs, "S" pour indiquer que l'utilisateur en question est également un superviseur, et "U" pour indiquer que l'utilisateur est un utilisateur sans droit particulier.

Ici, à titre d'exemple, la liste 24 définit les utilisateurs suivants :
- L'utilisateur "U 1", dont le mot de passe est "PSW1". Cet utilisateur appartient au service des ventes "P1" et n'est pas un superviseur.
- L'utilisateur "U 2", dont le mot de passe est "PSW2". Cet utilisateur appartient au service administratif "P2" et est un superviseur.
- L'utilisateur "U 3", dont le mot de passe est "PSW3". Cet utilisateur appartient au service opérationnel et n'est pas un superviseur.

La liste 26 définit des produits susceptibles de faire l'objet d'une livraison. Cette liste 26 comporte pour chaque produit les informations pré-enregistrées suivantes :
- un identifieur d'un produit, cet identifieur étant unique pour chaque produit,
- un nom du produit, et
- un lieu géographique.

Le lieu géographique indique ici la zone géographique dans laquelle le produit correspondant est livrable.

A titre d'exemple cette liste 26 définit les produits suivants :
- Un produit de "dépannage PABX" dont l'identifieur est "PR1" et dont le lieu géographique est "Paris Centre". Ce produit correspond à une intervention du service opérationnel en vue de dépanner un autocommutateur.
- Un produit "Installation PML" dont l'identifieur est "PR2" et dont le lieu géographique est "Paris centre". Ce produit correspond à une intervention sur site du service opérationnel en vue d'installer une prise multiligne.
- Un produit de "dépannage PABX" dont l'identifieur est "PR3" et dont le lieu géographique est "Lyon". Ce produit ne diffère du produit PR1 que par le lieu géographique de l'intervention.

La liste 28 définit des délais élémentaires de production pour chaque produit. Un délai élémentaire de production d'un produit correspond ici au temps nécessaire à une unité de production pour réaliser l'étape de production dont elle a la charge dans le procédé de production du produit correspondant. Cette liste associe ici à chaque délai élémentaire de production les informations suivantes :
- l'identifieur d'un produit, correspondant à l'un de ceux contenus dans la liste 26 de produits,
- l'identifieur d'une unité de production, correspondant à l'un de ceux contenus dans la liste 22, et
- un numéro d'ordre.

L'identifieur d'un produit désigne le produit auquel est asocié ce délai élémentaire de production.

L'identifieur d'une unité de production désigne l'unité de production chargée de réaliser l'étape de production du produit désigné par l'identifieur d'un produit précédent.

Le numéro d'ordre indique l'ordre dans lequel les délais élémentaires de production d'un même produit se succèdent. Ici le numéro d'ordre égal à un correspond à la première étape de production du produit.

A titre d'exemple la liste 28 comporte ici les informations suivantes :
- Un délai élémentaire égal à 24 heures portant le numéro d'ordre 1. Il est associé à l'identifieur d'une unité de production "P1" et à l'identifieur d'un produit "PR1".
- Un délai élémentaire égal à 24 heures portant le numéro d'ordre 2. Il est associé à l'identifieur d'une unité de production "P2" et à l'identifieur d'un produit "PR1".
- Un délai élémentaire égal à 168 heures portant le numéro d'ordre 3. Il est associé à l'identifieur d'une unité de production "P3" et à l'identifieur d'un produit "PR1".
- Un délai élémentaire égal à 12 heures portant le numéro d'ordre 1. Il est associé à l'identifieur d'une unité de production "P1" et à l'identifieur d'un produit "PR2".
- Un délai élémentaire égal à 12 heures portant le numéro d'ordre 2. Il est associé à l'identifieur d'une unité de production "P2" et à l'identifieur d'un produit "PR2"
- Un délai élémentaire égal à 12 heures portant le numéro d'ordre 3. Il est associé à l'identifieur d'une unité de production "P3" et à l'identifieur d'un produit "PR2" ;

L'agenda 30 contient les informations sur la disponibilité des dates pour la livraison des produits. Cet agenda 30 associe par exemple un identifieur d'un produit à une date réservée. Il comporte ici les informations suivantes :
- un identifieur d'un produit égal à PR1 associé à une date réservée égale au 12 janvier 2001;
- un identifieur d'un produit égal à PR1 associé à une date réservée égale au 17 janvier 2001.

Les listes et l'agenda précédents sont réalisés de façon classique par exemple à partir d'un logiciel de gestion de bases de données.

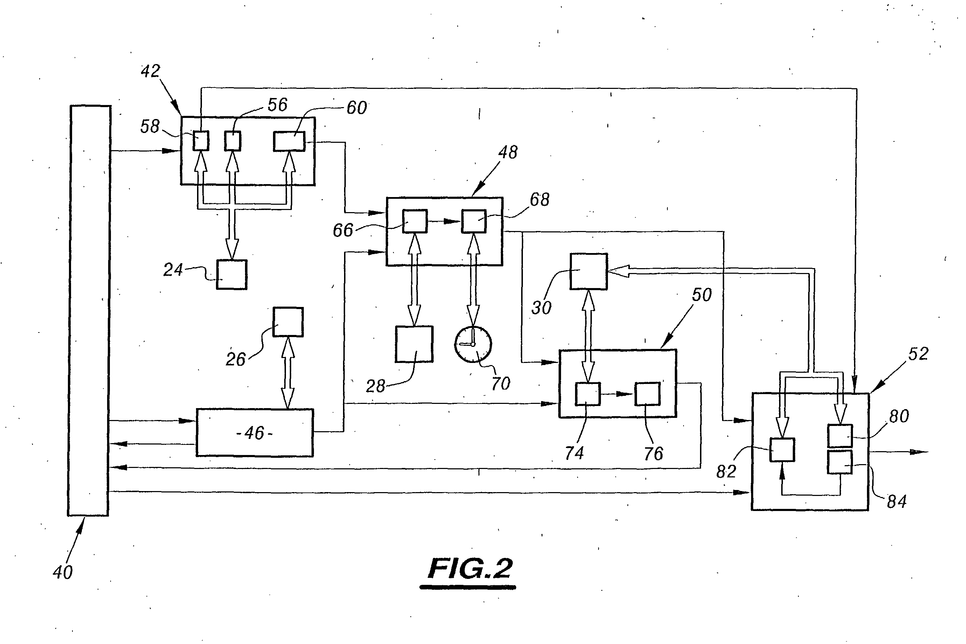

La figure 2 illustre l'architecture logicielle du logiciel 20 d'assistance à la prise de rendez-vous pour la livraison d'un produit. Ce logiciel 20 est destiné à transmettre vers les moyens de visualisation 12 de l'ordinateur 4 les informations nécessaires pour assister un utilisateur dans la prise d'un rendez-vous.

A cet effet, le logiciel 20 comporte une interface utilisateur 40 associée à un module 42 d'identification d'un utilisateur et à un module 46 de sélection d'un produit. Le logiciel 20 comporte également un module 48 de calcul d'un instant de fin de production, un module 50 de comparaison d'informations sur la disponibilité des dates avec un instant de fin de production et un module 52 de réservation de dates libres.

L'interface utilisateur 40 se compose ici de pages HTML (Hyper Text Markup Language) destinées à être chargées par le navigateur Internet de l'afficheur 12 sur l'ordinateur 4. Ces pages HTML sont aptes à assurer l'interface entre l'utilisateur de l'ordinateur 4 et les différents modules du logiciel 20.

Elles sont notamment réalisées de manière à permettre la saisie d'un nom d'utilisateur et d'un mot de passe, la sélection d'un produit dans la liste 26 de produits, et la consultation et la réservation d'une date libre.

Le module 42 est un module d'identification d'un utilisateur apte à recevoir le nom d'utilisateur et le mot de passe transmis par un utilisateur du système 2 à l'aide de l'interface utilisateur 40. Pour cela le module 42 est associé à l'interface utilisateur 40 et à la liste 24 d'utilisateurs. Il comporte un sous-module 56 de contrôle d'accès, un sous-module 58 d'identification d'un superviseur et un sous-modules de sélection 60. Le sous-module 56 est apte à interdire l'accès au logiciel 20 si le nom et le mot de passe de l'utilisateur transmis ne correspondent pas à l'un de ceux enregistrés dans la liste 24 d'utilisateurs.

Le sous-module d'identification 58 est adapté pour transmettre, vers le module 52 de réservation de dates libres, l'identifieur d'un superviseur associé dans la liste 24 au nom et au mot de passe reçus.

Le sous-module de sélection 60 est apte à transmettre, au module 48 de calcul d'un instant de fin de production, l'identifieur d'une unité de production associée dans la liste 24 au nom et au mot de passe reçus.

Le module 46 de sélection d'un produit dans la liste 26 de produits est associé à la liste 26 de produits et à l'interface utilisateur 40. Ce module est apte à afficher, dans le navigateur Internet de l'afficheur 12, la liste 26 de produits de manière à ce que l'utilisateur de l'ordinateur 4 puisse sélectionner l'un de ces produits. Il est également adapté pour que l'identifieur d'un produit correspondant à celui sélectionné par l'utilisateur soit transmis aux modules 48 et 50.

Le module 48 de calcul d'un instant de fin de production est raccordé aux sorties du module d'identification 42 et du module 46 de sélection d'un produit et à une entrée du module 50. Il est apte à déterminer une date de fin de production d'un produit à partir de l'identifieur d'un produit transmis par le module 46 et de l'identifieur d'une unité de production transmis par le module 42. Pour cela, il comporte deux sous-modules logiciels 66 et 68.

Le sous-module 66 est un additionneur. Il est associé à la liste 28 de délais élémentaires de production. Ce sous-module 66 est apte à calculer un délai total de production en additionnant les délais élémentaires de production contenus dans la liste 28 qui satisfont les conditions suivantes :
- l'identifieur d'un produit associé au délai élémentaire correspond à celui transmis par le module 46 de sélection d'un produit ; et
- le numéro d'ordre associé au délai élémentaire est supérieur ou égal à celui d'un numéro d'ordre initial. Le numéro d'ordre initial correspond à celui associé à la fois à un identifieur d'un produit et à un identifieur d'une unité de production respectivement égaux à l'identifieur transmis par le module d'identification 42 et à l'identifieur transmis par le module 44 de sélection d'un produit.

Le sous-module 68 est un module de conversion du délai total de production en un instant de fin de production. Il est associé à une horloge 70 et au sous-module 66. Ce sous-module 68 est apte à déterminer un instant de fin de production à partir du délai total de production calculé par le sous-module 66 et de la date et l'heure actuelle fournies par l'horloge 70.

Le module 50 de comparaison d'informations sur la disponibilité des dates à un instant de fin de production est raccordé à la sortie du module 46 de sélection d'un produit et à la sortie du module 48 de calcul d'un instant de fin de production. Ce module est apte à générer une page HTML contenant des dates libres susceptibles de convenir pour la livraison du produit, tout en étant postérieures à l'instant de fin de production transmis par le module 48. Pour cela le module 50 comporte deux sous-modules 74 et 76.

Le sous-module 74 est adapté pour la détermination de dates libres. Il est associé à l'agenda 30 de livraison. Ce sous-module 74 est apte, à partir de l'identifieur d'un produit transmis par le module 46, à sélectionner les dates réservées contenues dans l'agenda 30 qui correspondent au produit identifié, et, ensuite, à déterminer l'ensemble des dates libres pour la livraison du produit. Ce sous-module 74 est également apte à transmettre ces dates libres déterminées au sous-module 76.

Le sous-module 76 est un comparateur de dates à un instant de fin de production. Il est raccordé à la sortie du sous-module 74. Ce comparateur 76 est apte à comparer l'instant de fin de production transmis par le module 48 aux dates libres transmises par le sous-module 74 pour établir l'ensemble des dates libres postérieures à l'instant de fin de production.

Le module 52 de réservation de dates libres est raccordé à la sortie du module 48 de calcul d'un instant de fin de production, à l'interface utilisateur 40 et au sous-module 58 d'identification d'un superviseur. Ce module 52 est apte à enregistrer dans l'agenda 30 ou à interdire la réservation d'une date libre en fonction de l'identifieur d'un superviseur transmis par le module 58, de l'instant de fin de production transmis par le module 48 et de la date libre sélectionnée par un utilisateur et transmise par l'intermédiaire de l'interface utilisateur 40.

Pour cela le module 52 comporte trois sous-modules 80, 82 et 84. Le sous-module 80 est destiné à la réservation de dates libres uniquement postérieures à l'instant de fin de production. Il est associé à l'agenda 30. Ce sous-module 80 est apte à enregistrer dans cet agenda 30 la réservation d'une date de livraison pour un produit particulier si cette date de livraison est postérieure à l'instant de fin de production de ce produit transmis par le module de calcul 48.

Le sous-module 82 est propre à la réservation de dates libres uniquement antérieures à l'instant de fin de production. Il est associé à l'agenda 30. Ce sous-module 82 est apte à enregistrer la réservation d'une date de livraison dans l'agenda 30 antérieure à l'instant de fin de production d'un produit transmis par le module de calcul 48.

Le sous-module 84 est associé au sous-module 82. Ce sous-module 84 est apte à inhiber l'activation du sous-module 82 si l'identifieur d'un superviseur transmis par le sous-module 58 ne correspond pas à celui d'un superviseur c'est-à-dire ici à la lettre "S".

Le fonctionnement du système d'assistance à la prise de rendez-vous va maintenant être décrit à l'aide des figures 1 et 2 dans le cas particulier où l'utilisateur est l'utilisateur U2 et où la date du jour actuel est le 2 janvier 2001.

Avant la mise en service du système 2, la liste 22 d'unités de production, la liste 24 d'utilisateurs, la liste 26 de produits et la liste 28 de délais élémentaires de production sont enregistrées dans la mémoire 10 du serveur 8.

Lors de l'utilisation du système 2, l'utilisateur transmet, à l'aide du navigateur Internet de l'afficheur 12, son nom et son mot de passe, c'est-à-dire ici respectivement U2 et PSW2.

Le sous-module 56 de contrôle d'accès du module 42 d'identification d'un utilisateur compare alors le nom et le mot de passe reçus à ceux contenus dans la liste 24 d'utilisateurs. Si ce nom et ce mot de passe sont contenus dans cette liste 24 l'accès au logiciel 20 est autorisé. Dans le cas contraire, l'exécution du logiciel 20 s'interrompt.

Ensuite le sous-module 60 du module 42 d'identification d'un utilisateur sélectionne l'identifieur d'une unité de production associée à l'utilisateur U2, ici P2, et le transmet au module 48. Dans le même temps le sous-module 58 d'identification d'un superviseur sélectionne l'identifieur d'un superviseur, ici "S", associé à l'utilisateur et le transmet au module 52.

Une fois l'identification de l'utilisateur terminée, le module 46 est activé pour afficher dans le navigateur Internet de l'afficheur 12 de l'utilisateur la liste 26 de produits. L'utilisateur sélectionne par exemple le produit correspondant à une intervention de dépannage sur un autocommutateur qui doit avoir lieu au centre de Paris, c'est-à-dire ici le produit dont l'identifieur est égal à PR1. Cet identifieur PR1 une fois sélectionné par l'utilisateur est transmis au module de calcul 48 et au module de comparaison 50. Le module 48 est activé lorsqu'il a reçu à la fois l'identifieur d'une unité de production et l'identifieur d'un produit. Dès lors l'additionneur 66 détermine à partir de l'identifieur P2 et de l'identifieur PR1 que le numéro d'ordre initial correspondant dans la liste 28 de délais élémentaires est égal à 2. Ceci permet de déterminer que les délais élémentaires de production à additionner pour calculer le délai total de production avant l'achèvement des opérations de dépannage se compose :
- d'un premier délai élémentaire de 24 heures correspondant au temps nécessaire pour que le service administratif commande les pièces nécessaires au dépannage; et
- un second délai élémentaire de 168 heures correspondant au temps nécessaire pour réaliser l'intervention de dépannage.

Le délai total de production est donc ici de 192 heures. On notera que ce délai total de production ne prend pas en compte le délai élémentaire de production nécessaire au service des ventes pour que celui-ci enregistre la commande du client. En effet, à ce stade là de la production, si le service administratif est amené à fixer un rendez-vous avec le client, c'est parce que le service des ventes a déjà accompli sa tâche. Ainsi le délai de production total est automatiquement adapté en fonction de l'unité de production qui doit fixer le rendez-vous.

Une fois le délai total de production calculé, celui-ci est ajouté à la date du jour par le sous-module de conversion 68 pour obtenir un instant de fin de production. Cet instant de fin de production est donc ici le 10 janvier 2001. Cet instant de fin de production est alors transmis au module de comparaison 50 et au module de réservation 52.

A la réception de la date de fin de production, le module 50 de comparaison est activé. L'ensemble des dates libres est alors déterminé par le sous-module 74 en fonction des dates réservées pour le produit PR1 dans l'agenda 30. Ici l'ensemble des dates libres correspond à toutes les dates postérieures au 2 janvier 2001 à l'exception du 12 et du 17 janvier. Cet ensemble de dates libres est alors transmis au comparateur 76 qui les compare avec l'instant de fin de production reçu de manière à déterminer l'ensemble des dates à la fois libres et postérieures à l'instant de fin de production. Ici, cet ensemble de dates libres et postérieures à la date de fin de production est formé par toutes les dates postérieures au 10 janvier 2001 à l'exception du 12 et du 17 janvier. Le module 50 génère alors une page HTML contenant un calendrier sur lesquels les dates libres et postérieures au 10 janvier 2001 sont indiquées. Ce calendrier est alors chargé par le navigateur Internet de l'afficheur 12. Par l'intermédiaire de l'interface utilisateur 40, l'utilisateur U2 sélectionne une date libre et postérieure au 10 janvier 2001, par exemple le 13 janvier 2001. Ceci active le sous-module 80 de réservation de dates libres. Celui-ci vérifie que la date sélectionnée est effectivement libre et postérieure au 10 janvier 2001. L'utilisateur réserve alors la date sélectionnée ce qui conduit à l'enregistrement dans l'agenda 30 d'une nouvelle date réservée associée à l'identifieur PR1.

Dans le cas particulier de l'utilisateur U2, le sous-module 84 détermine que l'utilisateur est un superviseur. Par conséquent le sous-module 84 n'inhibe pas le sous-module 82 de réservation de dates libres antérieures à l'instant de fin de production. Ainsi l'utilisateur U2 a la possibilité, en tant que surperviseur, de réserver une date antérieure à l'instant de fin de production calculé.

En supposant que l'utilisateur U2 n'est pas un superviseur et qu'il a réalisé les tâches dont il était chargé en 1/2 heure au lieu des 24 heures normalement prévues, il est dans l'incapacité de réserver une date de livraison antérieure à l'instant de fin de production calculé par le module de calcul 48. Ainsi les planning des unités de production associés à des numéros d'ordre supérieurs au sien ne peut pas être modifié sans leurs accords. En effet, achever une étape dans un temps qui est inférieur au délai normalement prévu à cet effet ne permet pas systématiquement d'avancer l'instant de fin de production car les unités de production associées à des numéros d'ordre supérieurs ne sont peut être pas disponibles pour débuter leurs taches respectives avant les dates prévues dans leurs plannings. Dans cette situation la solution consiste pour l'utilisateur U2 a contacter par exemple l'utilisateur U3. En effet, l'utilisateur U3 peut réserver comme date de livraison pour ce même produit le 9 janvier 2001. Le système décrit ici oblige donc les différents utilisateurs intervenant dans la chaîne de production d'un produit à coopérer entre eux pour établir une date de livraison ne tenant pas compte des délais de production. Ce système oblige les utilisateurs à négocier entre eux des situations d'urgence.

## Revendications

1. Système (2) d'assistance à la prise de rendez-vous pour la livraison d'un produit comportant :
- des moyens (10) de stockage d'informations dans lesquels sont enregistrées des informations sur la disponibilité des plages horaires pour la livraison du produit ; et
- un afficheur (12) desdites informations sur la disponibilité des plages horaires, associé aux moyens (10) de stockage d'informations,
**caractérisé en ce qu'**il comporte :
- des moyens (10) de stockage d'informations comportant des informations représentatives d'un délai de production du produit,
- un module (48) de calcul d'un instant de fin de production en fonction des informations représentatives d'un délai de production du produit, et
- un module (50) de comparaison pour établir des plages horaires à la fois libres pour la livraison d'un produit et postérieures à l'instant de fin de production du produit, par comparaison des informations sur la disponibilité des plages horaires à l'instant de fin de production déterminé par le module (48) de calcul, et,
**en ce que** l'afficheur est adapté pour indiquer au moins les plages horaires à la fois libres et postérieures à l'instant de fin de production.

2. Système (2) selon l'une quelconque des revendications précédentes, **caractérisé en ce que** les informations représentatives d'un délai de production du produit comportent des délais élémentaires de production, et **en ce que** le module (48) de calcul d'un instant de fin de production comporte des moyens de détermination (66) du délai de production du produit à partir des délais élémentaires de production.

3. Système (2) selon la revendication 2, **caractérisé en ce que** chaque délai élémentaire de production est associé à une unité de production, ces unités de production intervenant successivement ou simultanément dans le procédé de fabrication du produit, **en ce qu'**il comporte un module (42) d'identification d'un utilisateur apte à identifier l'unité de production à laquelle appartient l'utilisateur du système (2), et **en ce que** le module de calcul (48) est adapté pour déterminer l'instant de fin de production en fonction uniquement des délais élémentaires de production associés à des unités de production intervenant dans le procédé de fabrication du produit après l'unité de production identifiée par le module (42) d'identification et/ou simultanément avec cette dernière unité, et en fonction du délai élémentaire de production associé avec l'unité de production identifiée par le module d'identification (42).

4. Système (2) selon l'une quelconque des revendications précédentes, **caractérisé en ce qu'**il comporte un module (80) de réservation uniquement des plages horaires à la fois libres et postérieures à l'instant de fin de production, établies par le module (50) de comparaison.

5. Système (2) selon la revendication 4, **caractérisé en ce que** :
- il comporte un module (58) d'identification d'un superviseur apte à identifier si un utilisateur du système est un superviseur, et
- il comporte un module (82) de réservation apte à réserver une plage horaire libre mais antérieure à l'instant de fin de production si l'utilisateur identifié par le module (58) d'identification d'un superviseur est un superviseur.
